(19) Europäisches Patentamt

European Patent Office

Office européen des brevets

(11) **EP 1 004 547 A1**

(12) **EUROPEAN PATENT APPLICATION**

(43) Date of publication:
**31.05.2000 Bulletin 2000/22**

(51) Int. Cl.⁷: **C02F 1/00**

(21) Application number: **98122099.9**

(22) Date of filing: **23.11.1998**

(84) Designated Contracting States:
**AT BE CH CY DE DK ES FI FR GB GR IE IT LI LU
MC NL PT SE**
Designated Extension States:
**AL LT LV MK RO SI**

(71) Applicant:
**Fengshui Water Technology Ltd.
9490 Vaduz (LI)**

(72) Inventor: **Hsu, Kenneth
8006 Zürich (CH)**

(74) Representative:
**Troesch Scheidegger Werner AG
Patentanwälte,
Siewerdtstrasse 95,
Postfach
8050 Zürich (CH)**

(54) **Integrated hydrologic circuit**

(57)    The present invention teaches the construction of integrated hydrologic circuits to store, filter, and/or sterilize large quantity of natural or treated waste water. The hydrologic circuits consists of at least one of the following: water-storage reservoir, a source with regulating mechanism, a sink with regulating mechanism, a porous-medium filtering conduit. A heating device to sterilize the filtered water can be installed in the hydrologic circuits.

**EP 1 004 547 A1**

Printed by Xerox (UK) Business Services
2.16.7 (HRS)/3.6

## Description

BACKGROUND OF INVENTION

Field of Invention

This is the third of series of inventions to construct integrated hydrologic circuits for rational storage, transport, filtering, and consumption of water. The first application *Use of Porous Medium in Integrated Hydrologic Circuits for Agriculture and for Urban Uses* was submitted July 28, 1998, and the second application *Integrated Hydrologic Circuit* was submited November 9, 1998, both to the U. S. Patent Office, Washington, D.C. The present invention teaches the improved construction of storage (hydrocapacitors), filtering (hydroconductors and hydroresistors), and sterilizing systems in the construction of integrated hydrologic circuits, especially those for water-filtering and water-recycling.

Description of Prior Developments

Hydrologic circuits consist at least of a storage as a source, a conduit for transport and filtering, and a distribution system as a sink of the circuit. Current hydrologic circuits are mostly surface systems of reservoir lakes for water storage, canals for water transport and irrigation, and water-towers for distribution to consumers. They are inefficient circuits because of loss during storage, transport, and consumption.

Water from natural systems such as rivers and lakes needs filtering and sterilization before the water can be used for urban consumption. Filtering of natural waters through natural aquifers has been practised. Where the filtering process involving a residence time of water in the filtering system for 17 days, the filtering device needs to have a very large volume. Natural waters are filtered in natural aquifers. Treated wastewater is commonly not pumped into natural aquifers for filtering, because of the danger of polluting natural ground water. Assembly of ponds with base filters has been designed (e.g., DE 4341531), the treatment is inefficient, a sterilization or partial sterilization device is lacking, and the cost-effectiveness of the system is not satisfactory.

At places, waste-water is treated and used again. Large open-air reservoirs for waxer-storage are built, but the loss to evaporation and to leakage during transport and storage is considerable.The quality of the treated waste-water is such that the treated waste-water is now used mainly for irrigation. The treated water has to be filtered, sterilized or partially sterilized before it can be used for urban consumption. Specially designed filtering system has been designed to supply plants in aquarium system with water rich in oxygen (e.g., DE 4204681); they are not applicable for filtering natural or treated waste water for urban consumption.

Our previous patent taught a process of constructing hydrologic circuits for water-transport and water-storage in porous medium. The shortcomings of the prior inventions are: (a) water-reservoir consisting of porous medium has only about 40% of the storage-capacity of a normal water-reservoir, (b) a conduit consisting wholly of porous medium impedes the rate of water-transport, (c) the filtering by the porous medium can effectively remove the particulate matter and in some instances dissolved matter, but may not be effective to remove germs which constitute health hazards. This invention teaches the construction of hydrologic circuits which remedy the shortcomings.

DESCRIPTION OF THE DRAWINGS

Figure 1. Horizontal section of a Porous-Medium Filter around a Swimming Pool, illustrating a trench-type of filtering device between a hydrologic potential; hydroconductors can be inserted to speed up the filtering rate.

Figure 2. Profile of a Porous-Medium Filter around a Swimmig Pool, illustrating a trench-type of filtering device between a hydrologic potential; hydroconductors can be inserted to speed up the filtering rate.

Figure 3. Helminthoid-Type of Arrangement:
      A trench or tunnel filled with porous medium, dug in impermeable medium and switching back and forth a boustrophedon-fashion, can serve as a filtering device for treated waste-water or other contaminated water.
      Perforated pipes, arranged in a boustrophedon fashion inside a disk-shaped filter filled with porous medium, can increase the rate of waterflow through the filtering device.

Figure 4. Tunnel, dipping from a horizontal and filled with porous medium, can serve as a filtering device for treated waste-water or other contaminated water.

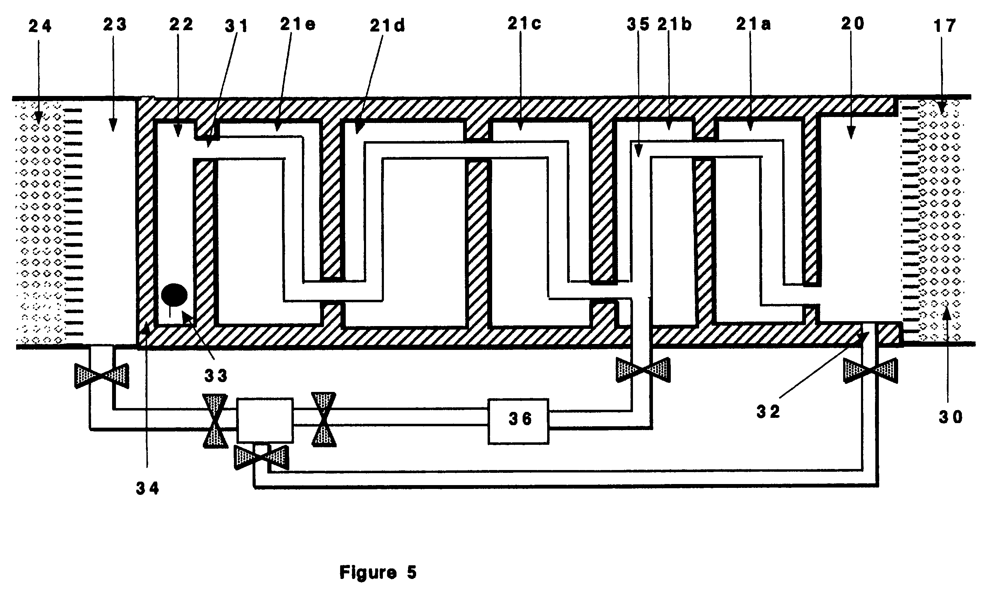

Figure 5. A system for sterilizing or partially sterilizing recycled water consisting of boilers (22), heating chambers (21a-e), and cooler (20).

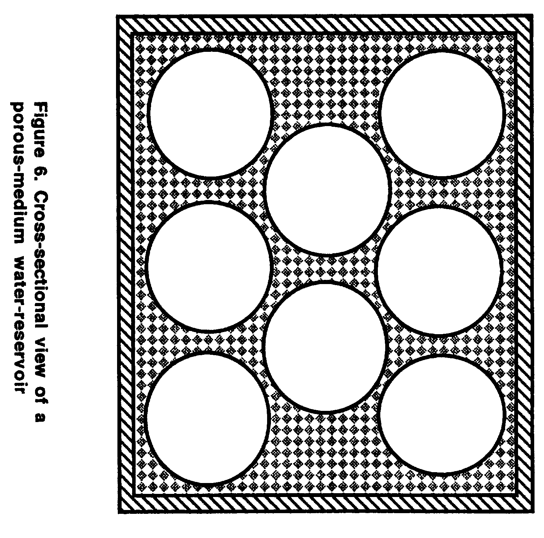

Figure 6. Cross-sectional view of a Porous Medium Water-Reservor. Placement of perforated pipes in a porous-medium can increase the water-storing capacity of the facility.

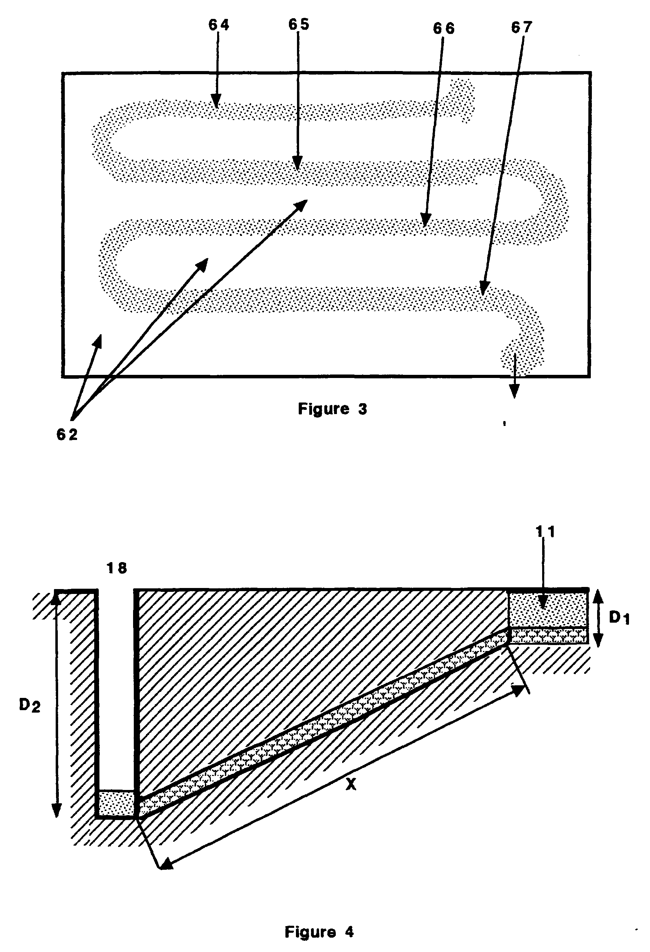

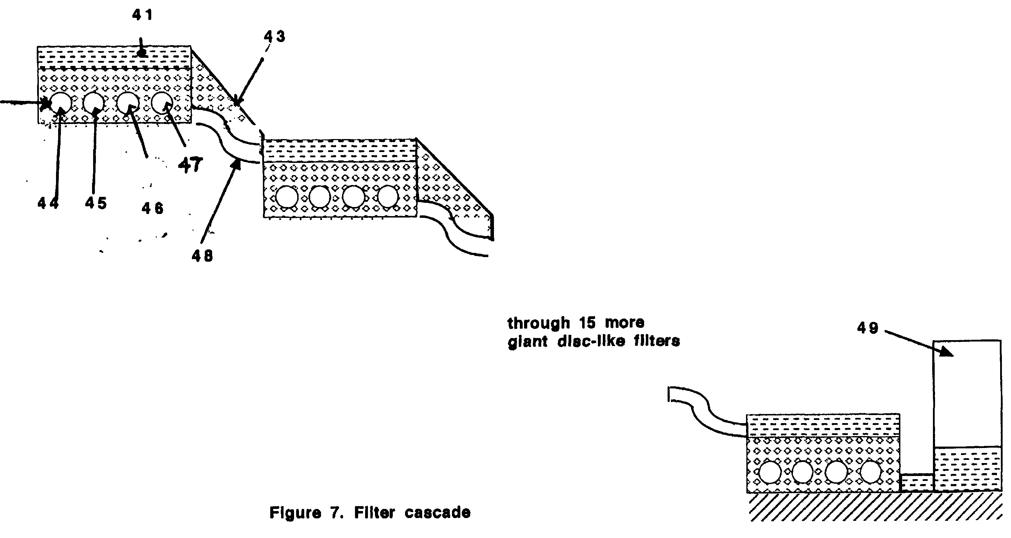

Figure 7. Filtering System for Treated Waste-Water. A cross-section of the system, showing the arrangement of a shallow water-reservoir (41) at the top of each disk, and perforated pipes (44-47) arranged in a helminthoid fashion (see Fig. 3) within a porous medium at the lower half of each disk

## DESCRIPTION OF THE PREFERRED EMBODIMENT

This invention teaches a process of constructing hydrologic circuits, mostly underground, for storing, filtering, and/or steriling water.

Water-flow is comparable to an electric circuit for the flow of electrons. A simple electric circuit consists of an arrangement of capacitors, resistors, conductors, insulators, collectors, and/or filters. Electrons are induced to flow through an electric circuit under an electric potential difference. A hydrologic circuit consists of an arrangement of hydrocapacitors, hydroresistors, hydroconductors, hydroinsulators, hydrocollectors, and/or hydrofilters. A sterilizing system, functioning as a biologic filtering device, can be connected to a hydrologic circuit. Water is induced to flow under a hydrodynamic potential difference

Hydrocapacitors are water-storage devices. Our prior inventions taught the construction of water-storage structures filled with porous medium. Hydrocapacities completely filled with porous medium has a capacity of 40% of the volume of the structure. A hydrocapacitor partially filled with porous medium has a capacity greater than 40% of the volume of the structure. Where porferated piples are stacked on top of one another, the storage capacity is as high as 80% of the volume of the structure.

Hydroresistors are conduits where the rate of water flow is impeded. Water flowing through a porous medium is comparable to the flow of electrons through a resistor. Water conduits filled with porous medium are thus hydroresistors.

Hydroconductors are conduits where the rate of water flow is maximized. Water flowing through cavities, such as porferated piples arranged perpendicular to the flow-direction, is comparable to the flow of electrons through a conductor. Water conduits not filled with porous medium are thus hydroconductors.

Hydroinsulators are device to insulate the water loss. Relatively impermeable material such as compacted clay, plastic, etc. are hydroinsulators against seepage. Coarse grained loose debris covering hydrocapacitors are hydroinsulators against evaporative loss.

Hydrocollectors are systems to collect natural waters, including natural precipitations for hydrocapacitors.

Hydrofilters are various types of filtering device to filter the particulate, dissolved contaminants and/or pollutants. Hydrofilters may serve the sterilizing function, when the residence time of water in hydrofilters is more than a number of days (usually 17). Special sterilizing devices can be built in hydrofilters.

Hydropotential is an abbrevication for the expression hydrodynamic potential. The polarities of hydropotential are the source and the sink of an integrated hydrologic circuit

The present invention teaches the construction of integrated hydrologic circuits including one or more of the components mentioned above. The circuits are so constructed to minimize the loss during storage, transport, and filtering, and maximize the use of the gravitational energy for the movement of water. Circuits are designed according to Darcy's Law of Fluid Flow in order to achieve the following objectives:

(1) to store a desirable quantity of water
(2) to filter a desirable quantity of water at an optimum rate.
(3) to filter a desirable quantity of water during a desirable time-interval.
(4) to filter a desirable quantity of water in order to achieve a desirable quality.

Construction of Hydroresistors and Hydroconductors.

Different types of linear-shaped filtering-device, i.e. hydroresistor, can be constructed; they include:

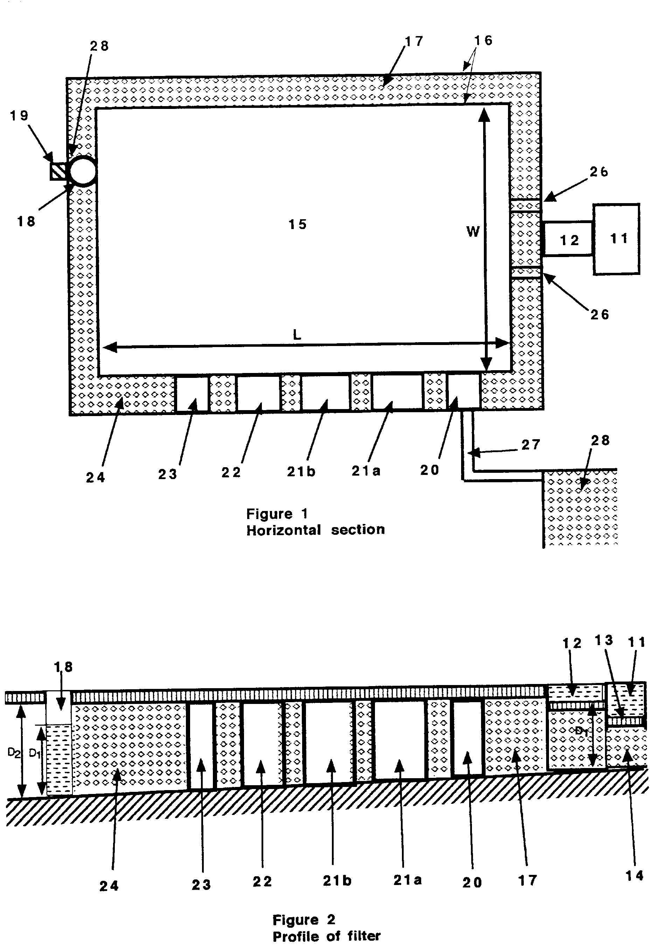

A rectangular filtering device consists of trenches in an impermeable or relatively impermeable medium, placed near or adjacent to a standing water body (Figs. 1 & 2). The trenches are filled with porous medium of transmissiblity K. A trench-type of hydroresistor is particularly useful for filtering through a recycling the water in a standing water-body.

A helminthoid-type of filtering device is a trench, switching back-and-forth in boustrophedon-fashion, filled with porous medium of transmissiblity K, located within a relatively impermeable medium (Fig.3). A helminthoid-type filter is particularly useful for filtering the water requiring a maximum residence-time in the filter.

A cylindrical filter is a tunnel x meters long d meters in diameter (Fig. 4), filled with porous medium of a transmissibility K, located within a relatively impermeable. The tunnel can be horizontal or inclined to the ground surface, and the inclination angle is designed to obtain a desired flow-rate.

More complex filtering systems can be a system of filter-discs, through which water flows through one disc after another from source to sink. To speed up the motion through the porous medium, tunnel (s), especially the "helminthoid"-type of tunnel switching back-and-forth in boustrophedon-fashion, can be constructed as hydroconductors inside a porous medium (Fig. 3). The installation of such or other hydroconductors permits the flow of the water at an optimum rate needed for large-consumption.

Filters are designed according to Darcy's law to render the flow of a quantity of water Q through a porous-medium filter per unit time:

$$Q = K \, (dH/dl)A$$

where (dH/dl) is the hydrodynamic gradient, or hydropotential, of water flowing through the filter, A is the cross-sectional area of the conduit filled with a porous medium, and the transmissimility K of the hydroresistor is defined by

$$K = \rho \, g \, k \, / \eta$$

where $\rho$ is density, g is gravitational acceleration, k is permeability of porous medium and $\eta$ is viscosity of fluid flowing through the filter.

The quantity of water that needs to be filtered and the rate of its flow are determined by the user. The hydroresistors and the hydropotential are selected in the design to effect the desired quantity of water-flow at a desired rate.

The transmissibility K of any segment of the hydroresistor, i.e., conduit filled with a granular matter, is a function of the medium-diameter of the granular matter: gravels have greater transmissibility, fine sands and silts are less transmissible. The transmissibility K of the whole circuit is the effective transmissibility of water flowing through the circuit and is calculated on the basis of the flow quantity Q, the cross-sectional area of the conduit at the sink, and the hydropotential of the flow.

The transmissibility of a circuit can be rendered greater by placing hydroconductors, i.e., segments or portions not filled with a porous medium, into the circuit.

Once constructed, the transmissibility of the circuit remains constant .The quantity of the water flow can only be adjusted by varying the hydropotential of the circuit . The hydropotential is expressible by hydraulic gradient, which is the difference in height between the source and sink divided by the distance travelled by water through the circuit.

Construction of Hydropotential (Source and Sink)

To construct an integrated hydrologic circuit for water-filtering, the source and the sink of the circuit are so placed, or water is added or removed from the source aand sink at such a rate, to constitute a hydropotential to induce a desired flow rate.

Where natural topography exists, the height difference between the source and sink constitutes the hydropotential. Where the ground is flat, the height difference has to be adjusted by regulating the water level in the source or in the sink of the system.

The source of an integrated hydrologic circuit is a hydrocapacitor, which can be a water tower, a water-basin (11, Figs. 1,2, 4), or a trench, pit, or tunnel, filled or not filled, with porous medium, or a combination of those. A reservoir filled with porous medium is preferred where the evaporative loss is to be minimized and where the land-use of the area underlain by the water-storage is desired.

The sink of the integrated hydrologic circuit is also a hydrocapacitor, which can be a hole (18, Figs. 1, 2, 4), a trench or pit, filled or not filled with porous medium, or a combination of those. A hole is preferred where water can be pumped out of the hole to establish a sufficiently high hydraulic gradient for the flow of water through the filter (Fig. 1, 2 and 4). A porous-medium sink is preferred where the evaporative loss is to be minimized and where the land-use of the area underlain by the water-storage is desired. A water-tower sink is preferred where the height-difference between the source and sink of the system is sufficiently great to permit the water filtering through the circuit to flow into the tower under gravity.

Where the source or sink is a trench or pit filled with a porous medium, a regulator has to be constructed. The regulator can be a hole in the trench. A thin-cylinder shell (19 Fig. 1) made of concrete, such as a segment of a sawed-off drainage-pipe, is installed and rooted in the bottom of a trench. The shell is perforated. After the trench is filled with a porous medium (17 ), there is a hole (18) in the trench. After the gravel-filled trench is filled with water, the water level in the hole when the water within the circuit is hydrostatic is the same as the water level in the gravelled-filled trench.

The water-level of the source can be raised by water flowing or pumped into the source. The water level in the sink can be lowered by water flowing or pumped out of the regulating hole. Since the flow rate of water through a porous medium is much slower than the rate of feeding water into the source-, or pumping water from the sink-regulator, the porous medium of the filtering system is commonly completely filled with water when water moves through the circuit. The hydropotential and the flow-rate can be adjusted by varying the rate of pumping, from or into, a regulator or both regulators.

Construction of Hydrofilters

The hydrofilter of an integrated hydrologic circuit is a porous medium in a trench, pit, or tunnel, or other water-containing structure. The porous medium may consist of gravel, sand, broken bricks, broken rock debris, and/or other materials. Water can flow or be pumped into the porous medium.

The installations of hydroconductors (e.g., 20, 21a, 21b, 22, 23 in Figs. 1 & 2) may be necessary so that water can flow through the hydrologic circuit at a sufficiently rapid rate.

The conduit filled with porous medium that is more or less chemically inert serves to filter out particulate matter. The movement through a conduit achieves a hydrodynamic state to prevent stagnation, growth of algae etc., of an otherwise standing water-body.

The quality of filtering can be improved upon by inserting specially made filters of various kind. Filters containing chemical (s) can remove dissolved components in water being filtered.

### Hydrosterilizer

Where natural waters, treated waste-waters, or recycled waters need sterilization to remove germs, fungus, or other biologic health-hazard, alternative sterilization can be installed.

One form of biological filtering is to construct hydrocapacitors for the circuit to have a water-storage volume more than 17 times that of the daily consumption. Water needed is taken from the last one of the 17 hydrocapacitors each day. Water coming out of the circuit will thus have stayed inside the circuit without contact with air for 17 days or more. The long residence time underground achieves the possibility killing off the germs. The advantage of this system is its simplicity, the disadvantage is the cost of constructing a circuit with capacitors of such large volume.

Another form of biological filtering is to insert a fine-grained porous medium within a porous-medium filter: germs cannot pass through the very small pore of the porous medium and will be filtered out where it is eventually decayed into carbon dioxdie and water.

Still another form of biological filtering is a heat treatment. After water is distilled after boiling, the water is completely sterilized and will be potable. Distillation, however, may not be necessary for urban use. A temperature of 70 C will kill all but the most heat-resistant germs. A partial sterilization ("pasteurization") is adequate under certain circumstances.

Heat treatment is not a current option, because the energy cost seems prohibitive, if the filtered water is allowed to lose the heat again to the ambient medium. This invention teaches the construction of a sterilization device to reduce the energy cost economically feasible. Furthermore, the heater-filter system can have a dual use where thermal energy needed for partial sterilization is recycled.

The construction utilizes the principle that only a small segment of the filtering system has a maximum temperature, say 70°C, and the partially sterilized water is allowed to be cooled through the hydrologic circuit in such a fashion as to pre-heat up the water to be sterilized before it enters the boiler of the sterilization device.

Figure 5 illustrates the construction a heat-recycling system for sterilization.

The hydrologic circuit has a number of chambers devoid of porous medium. Those chambers are lined by heat-insulators from the surrounding, and separated from one another by partitions, which could be cement-walls or segments of porous medium. Water from the source (30) enters from porous medium (17) and from there through a perforated wall into a cooler (20). From there, the water enters one after another of the heating chambers (21a-e Fig. 5). From the last heating chamber (21e) the water enters a boilder (22, fig. 2 & 5).

Water is heated by a heater (33) to a temperature desired, e.g., 70°C for partial sterilization, in the boiler. The water (31) from the boiler enters a pipe (35). The water in the pipe cools down as the pipe switches back through the heating chambers (from 21e to 21a), heating up the incoming water from the cooler (20). The water temperature of water in the cooler (20) is only slightly higher than that of the source-water seeping into the cooler from a porous-medium filter (30).

The water (32) in the pipe coming out of the cooler (20) is sterilized or partially sterlized and has a temperature only slightly higher than that of the water from in the porous medium coming from the source. The water is then piped to a second cooler (23) on the other side of the boiler (23). As the temperature cools slightly *en route*, the water temperature can thus be reduced to the same as that of the source water. From there the sterilized water re-enters the porous-medium filter (24) and be eventually pumped out of the sink (18, Fig. 1) of the circuit into the standing water body (15, Fig. 1).

The heat-source for elevating the temperatures in the heaters (21 a-e) is derived from the heat of the water from boiler (22) from the last heating chamber (21e). The only energy expended for sterilization is thus only that of raising the water-temperature from that of the last heating chamber (21e) to that of the boiler (22).

This value of this temperature difference depends upon the number of heating chambers constructed. We show a series of 5 heating chambers in Figure 5 to heat water from 20°C to 70°C for partial sterilization. Each of the chambers 21a-e is some 10°C warmer than the preceding chamber. For greater efficiency in heating more heating chambers can be constructed.

To prevent heat losses from the boiler and heating chambers, they should be lined with thick insulation material (34). Under certain circumtances heat may be needed somewhere, or at colder times of greater heat-loss during water recycling, warmer water from one of the warmer heating chambers (e.g., 21b) can be fed through a pipe-system to the site of heat-consumption (36) before the water is returned to the cooler (23) and the porous-medium filter (24) on the down-stream side of boier (22).

Where the heating is more convenient above ground, the boiler of the hydrologic circuit can be simply a conventional boiler, linked to the subsurface hydrologic circuit described above.

### Construction of Hydrodistillator

Where the natural water is too saline or in case the treated waste-water contains too much soluble salt, distillation is necessary in order to make the water potable. Normal desalinization plants are too expensive to be economical. A hydrodistillator can be constructed in the same manner as the hydrosterilizer is constructed, except the water in the boiler should be heated above the boiling point . Conventional boiler used nowadays for desalinization of sea water could be used. The boiler can be constructed above ground and is connected to a subsurface hydrologic circuit for filtering and distillating.

## DESCRIPTION OF EXAMPLES

### Recycling of Water in a Swimming Pool.

A practical application of the filtering device is to recycle water in a swimming pool. The experiences from the application is useful when large-scale filtering of treated waste-water or polluted natural water is planned. Recycling swimming pool is a scale-model of the larger projects.

An automatic filtering-system can be added to a swimming pool at the time of its construction or later.

A swimming pool with a dimension L (length) • W (width) • D (depth) can be fringed by trenches on four sides (Fig. 1). The depth of the trench D can be about the same as the depth of the adjacent swimming pool. Since a swimming pool usually has a shallow and a deep end, $D_1$ to $D_2$ respectively, the trench parallel to the length of the swimming pool has a gently dipping slope (Fig. 2).

### Hydropotential

The source of the circuit is a small pool (11) at the shallow end. The small pool is connected by a narrow and shallow open-channel (12) to the main pool (15). The depth of the smaller pool is smaller than $D_1$. The ground under the small swimming pool (11) is excavated and filled to depth $D_1$ by a porous medium (14). Water from the small pool sinks through a drain (13) directly into the porous medium under the small pool (14). The trenches (16) filled with a porous medium (17) along the sides of the pool are sloping downward toward the deep end.

The sink of the ciricuit is a hole (18) is at the deeper end of the swimming pool. To construct the sink-regulator, a thin-cylinder shell made of concrete, such as a large sawed-off sewage-pipe, is rooted in the bottom of the french is constructed. The shell is perforated to a height $D_1$ from the bottom.

The waxer-level in the source (11) and sink (18) regulates the hydropotential of the circuit. Since the level in the source should be the same as that of the level of the main pool (15), the water level of the source will rise when water is pumped into the swimming pool (15). In order to create a substantial height difference between the source and sink, the water level in the sink-regulator can be kept very low by using a pump (19) to pump water out of the regulator (18) into the swimming pool (15).

Using the hydrologic circuit, the water of a swimming pool is circulating as long as the pump is working. When the pump stops, water in the sink is filled up to the same height as the water-level in the swimming pool and the level in the source; the circulation stops thus automatically.

### Filtering Medium

The filtering device consists of porous medium. The choice of the hydroresistors (porous medium) and hydroconductors (segments devoid of porous medium) will determine the rate of waterflow through the system.

Two short segments (26) of the trench-system are the places where ready-made filter of a fine-grained porous-medium can be inserted. The filter can be built-in chambers with perforated walls filled with fine sand or silt. Or factory made filters can be inserted into the slot. An impermeable plate can also be inserted in one of the two places when only one half of the filtering-system is to be used in operation.

Hydrocapacitor (28) is a storage for rainwater or for tap-water. Water from the capacitor is needed from time to time to compensate the water-loss from hydrologic circuit The water can be fed into the circuit through a conduit (27). The storage capacity of the hydrocapacitor can be increased through the insertion of empty containers, such as saw-off segments of large-diameter pipes (Fig. 6). The walls of the containers are perforated to permit free movement between the containers and the porous medium of the hydrocapacitor.

After the filtering device is in use for sometime, the pore space in the porous medium could be partly plugged, by calcium-carbonate cement for example. Clean water with a low pH, such as rainwater from cities, can be used to flush through the hydrologic circuit and to dissolve the cement in the pore space.

### Dual Purpose Heater and Sterilizer

A swimming pool has to be kept clean, the quality of pool-water has to meet local sanitary standard. Current practices of using chemicals have numerous shortcomings, and numerous persons are allergic to such chemicals.

Where the local conditions (such as temperature, contamination, etc.) are not particularly conducive to the growth of bacteria and fungus in the pool-water, a filtering system through very fine sieves (26) placed near the source is a most economic solution. The grain size of the filter sand/silt is such that the germs are filtered out physically.

Where the growth of biologic hazards is rapid, and daily replacement of the pool water by nearly sterile water is required, one can construct a sterilization device as described in the specifications above (Fig. 5). Pool-water circulating through the heating device is sterilized by the high temperature. A 70°C temperature in boiler is commonly sufficient, and the water could be sterilized at higher temperatures at a slightly more energy cost.

The heat required for partial sterilization through the device described by this patent application is equivalent to the heat required to elevate the temperature from the last heating chamber to that of the boiler. When circulated pool-water is to be heated in a 5-chamber pre-heating device from 20°C to 70°C for partial sterilization, the energy required is equivalent to the thermal energy needed to elevate the water-temperature by some 10°C, not the energy required to raise the water-temperature by 50°C as it would be required in an ordinary sterilization device. The sterilization device can thus serve a dual-purpose, for sterilization and for heating a swimming pool with about the same energy requirement .

Filtering with Linear Devices

The filtering device for recycling water from a swimming pool is a scale-model for systems filtering large volumes of water.

Treated waste-water is now used in Israel for irrigation. Consideration of using waste-water for urban consumption is, however, being considered at numerous cities becasue of the world-wide water shortage. A filtering system using porous medium, as described in this specification, can be designed to filter treated waste-water until it becomes usable for urban consumption.

Where arroyos (dry creeks) filled with porous medium have been cut into granite, the alluvial gravel and sand are ideal filters for treated waste-water, because the bottom is leak-proof. Hydropotentials are installed to induce water-flow through the natural porous medium. Hydroconductors can be introduced so that the flow rate could be rendered faster, the hydroconductors being segments devoid or partially of a porous medium. After the filter is covered with mud and top soil, cultural land is obtained for agricultural purposes, or for other development . Care has to be taken, however, to design spillways and/or reservoirs to take care of the flood water which is normally drained by the arroyos.

One can use existing channels, such as the desiccated Los Angeles River in the City of Los Angeles as the base of a water-filtering system. The river channel is now paved with concrete. The channel can be made into a giant water-filter by filling it with a porous medium, such as sand, gravel, or broken rock fragments. Hydropotentials are installed to induce water-flow through the natural porous medium. Hydroconductors can be introduced so that the flow rate could be rendered faster, the hydroconductors being segments devoid or partially of a porous medium. After the filter is covered with mud and top soil, cultural land is obtained for agricultural purposes, or for other development Care has to be taken, however, to design spillways and/or reservoirs to take care of the flood water which is normally drained by the arroyos.

A problem of filtering natural or treated water is the slow flow-rate through porous medium, especially in regions of low relief. Dipping tunnels can be constructed to increase the rate of flow through the filters (Fig. 4). The construction of a tunnel filled with porous medium is expensive. The device might only be useful to filter a small quantity of water for uses in such places as resort hotels or vacation houses in the mountains.

"Filter Cascade"

This invention teaches the filtering of a large quantity of water for urban consumption through a "Filter Cascade." This system consists of plate-shaped filtering devices arranged in series. The giant "filter-plates" can be arranged in the fashion like terraced fields on a mountain-side, or they can be elongated "plates" arranged in a boustrophedon-fashion, switching back and forth, like roads coming down a steep mountain side. Each filter is placed at an elevation of lower than the preceding filter, forming thus the "Filter Cascade"(Fig. 7). Water to be filtered is pumped up to the highest elevated water-reservoir. From there, water seeps through the porous medium, connected by the helminthoid-hydroconductors in the "plates," and cascading into the water-reservoir of the next "plate." The water is thus filtered down through the sequence of filters under gravity.

The source of the hydropotential is a water-reservoir (41) underlain by a pit filled by porous medium, such as gravels or broken rock fragments (42). The porous medium is placed behind an inclined bank (43), built in such a way as to be water-impermeable. Water pumped into the reservoir (41) sank rapidly into the porous medium (42) because of the large cross-section of the "plate" perpendicular to the direction of the flow. Water is slowly filtered by the porous medium. The filtered water coming out of the porous medium (42 in Fig. 7, equivalent to 62 in Fig. 3) is then collected by "hydroconductors." Those can be perforated pipe arranged in a helminthoid fashion (44-47 in Fig. 7 equivalent to 64-67 in Fig. 3). From there the filter water cascades into the source-reservoir of the next plate-shaped filter.

In order to have a steady supply of sterilized water, a series of 17 or more giant plate-shaped devices can be built. The water-volume in the pore space of each device should be the same as the estimated daily water-consumption of the user. Water seeps through the porous medium of each filter and cascades down from one to another. The sink of the circuit is a water tower (49). The construction of the tower recovers much of the gravity energy lost during the filtering, so that water can be distributed from the tower for urban consumption.

Heating provides an alternative system of sterilization. One could construct one or two giant plate-shaped devices, with a water-volume in pore space in the device equal to that of daily consumption. In that case, a heating device as described in the specification of the patented application, can be constructed for sterilization or partial sterilization. Thermal energy from incineration of urban wastes could be utilized to heat up the water in the boiler of the filtering device.

Filtering of Soluble Impurities from Contaminated Water or Waste Water

A filtering system similar to that use to recycle swimming-pool water can be constructed the filtering of soluble impurities such as radioactive substance or poisonous heavy metals. The use of the filtering system may make it possible to use the contaminated or polluted water, such as in the region around Tschernobyl, after feeding the water through such a filter system.

A filtering system can also be connected to a standing waterbody such as a stagnant pond or a small oligotrophic lake.

Construction of Dike System for Water-filtering and Flood-Control

Banks or dikes are constructed on the of rivers and canals to prevent the spillover of flood water from rivers or canals. The earth-material under a dike is commonly mud, or very fine-grained sediment which is practically not permeable. The banks and dikes are further protected by man-man structures to prevent erosion.

A hydrologic circuit to filter natural water can be constructed on the side of natural waterways. The constructional structrure can serve at the same time the function of a dike system. The hydropotential of the circuit is the water flow of the natural waterway. The hydroresistors, serving as hydrofilters, are sands and/or gravels as hydrofilters under a cemented and reinforced bank of dykes. River or canal water can be introduced into the circuit to be filtered for urban consumption.

The filtering process can be speeded up through the addition of hydroconductors. They can consist of segments of perforated sewage-pipes embedded in a porous medium, or simply segments of sewage pipes opening in the direction of flow. Inlets to and outlets from the hydrologic circuit are constructed, and they are normrally closed. The outlets are only opened at the time of flood-warning so that the water in the hydroresistors (porous medium) and in the hydroconductors (pipes) of the hydrologic circuit under the dike can flow or be pumped out to a reservoir and/or to places of no flooding-danger. The inlets to the circuit are then opened when the high water arrives. The flood water is drained into hydrologic circuit, and from there to a reservoir and/or to places of no flooding danger.

**Claims**

1. Construction of integrated hydrologic circuits for storing, filtering, recycling, or conducting waters, based upon the integration of at least two or more components of hydropotentials, hydrocapacitors, hydroconductors, hydroresistors, hydrofilters, hydrosterilizers.

2. A hydrologic circuit according to claim 1, wherein the hydropotential consists of a source (positive potential) and a sink (negative potential) and equiped with regulating mechanisms constructed according to the specifications to induce water movement of a prescribed volume at a prescribed rate through the circuit

3. A hydrologic circuit according to claim 1, wherein hydrocapacitor is constructed according to the specifications to store or contain water of a prescibed volume.

4. A hydrologic circuit according to claim 1, wherein hydroconductor is constructed according to the specifications to increase the rate of the movement through the circuit to a prescribed rate.

5. A hydrologic circuit according to claim 1, wherein hydroresistor is constructed according to the specifications to decrease the rate of the movement through the circuit to a desired rate.

6. A hydrologic circuit according to claim 1, wherein hydrofilter is constructed according to the specifications to improve the quality of the water moving through the circuit.

7. A hydrologic circuit according to claim 1, wherein hydrosterilizer is constructed according to the specifications to sterilize or partially sterilize the water moving through the circuit.

8. A hydrologic circuit according to claim 1 and 7, wherein a heating-device is constructed according to specifications to serve as hydrosterilizer to sterilize or partially sterilizer the water moving through the circuit.

9. A hydrologic circuit according to claim 1 and 7, wherein a heating-device is constructed according to specifications to serve as hydrodistillizer to sterilize and/or to desalinize the water moving through the circuit.

10. A hydrologic circuit according to claim 1 for filtering natural water or treated waste-water wherein said hydrocapacitor is a natural feature or a man-made structure filled with porous medium.

**11.** A hydrologic circuit according to claim 1 for filtering natural water or treated waste-water wherein said hydrocapacitor is a natural feature or a man-made structure only partly filled with porous medium, leaving a portion of the storage devoid of porous medium to maximize the capacity of water-storage

**12.** A hydrologic circuit according to claim 1 for filtering natural water or treated waste-water wherein said hydroresistor is a natural feature or a man-made structure filled with porous medium.

**13.** A hydrologic circuit according to claim 1 for filtering natural water or treated waste-water wherein said hydroresistor is a natural feature or a man-made structure only partly filled with porous medium, leaving a portion of the system devoid of porous medium to increase the movement-rate of the water moving through the circuit

**14.** A hydrologic circuit according to claim 1 for filtering natural water or treated waste-water wherein said hydrorfilter is a natural feature or a man-made structure filled with a porous medium, selected according to specifications to improve the quality of water moving through the circuit .

**15.** A hydrologic circuit according to claim 1 for filtering natural water or treated waste-water wherein said hydrosterilizer is a natural feature or a man-made structure, filled with a porous medium, of such a size that the water moving through the sterilizer has enough residence time to sterilize the water moving through the circuit .

**16.** A hydrologic circuit according to claim 1 for filtering natural water or treated waste-water wherein said hydrosterilizer is a man-made device heating the water moving through the sterilizer to high enough temperature to sterilize or partially sterilize the water moving through the circuit.

**17.** A hydrologic circuit according to claims 1-6 wherein said hydropotential consisting of a source-regulator and sink regulators, hydroresistors, hydroconductors and hydrofilters are constructed according to specifications so that water in a swimming pool can be circulated and filtered at prescribed rate.

**18.** A hydrologic circuit according to claims 1-7 wherein said hydropotential consisting of a source-regulator and sink regulators, hydroresistors, hydroconductors, hydrofilters, and a hydrosterilizer are constructed according to specifications so that water in a swimming pool can be circulated, filtered, sterilized, and heated or cooled at a prescribed rate.

**19.** A hydrologic circuit according to claims 1-6 for filtering treated waste-water or natural waters wherein wherein said hydropotential, hydroresistors, hydroconductors and hydrofilters are constructed according to specifications so that natural or treated waste-water can be circulated and filtered at prescribed rate.

**20.** A hydrologic circuit according to claims 1-7 for filtering treated waste-water or natural waters wherein wherein said hydropotential consisting of a source and sink, hydroresistors, hydroconductors, hydrofilters, and hydrosterilizers are constructed according to specifications so that natural water and treated waste-water can be circulated filtered, and sterilized at prescribed rate.

**21.** A hydrologic circuit according to claims 1-7 for filtering treated waste-water or natural waters wherein wherein said hydropotential consisting of a source and sink, hydroresistors, hydroconductors, hydrofilters, and hydrodistillizers are constructed according to specifications so that natural water and treated waste-water can be desalinized.

**22.** A hydrologic circuit according to claims 1-6 for filtering natural water or treated waste-water wherein said filtering device is a constructional structure filled with porous and permeable medium, said structure could serve as dikes on the side of rivers or canals to contain river or canal water.

**23.** A hydrologic circuit according to claims 1-6 and 18 for filtering natural water or treated waste-water wherein hydroconductors are so constructed according to specifications so that water in the porous medium of the dyke system can be drained shortly before the arrival of flood-water to relieve the danger of flooding.

**Figure 1**
**Horizontal section**

**Figure 2**
**Profile of filter**

64 65 66 67

**Figure 3**

62

18  11

D1

D2

X

**Figure 4**

Figure 5

EP 1 004 547 A1

Figure 6. Cross-sectional view of a
porous-medium water-reservoir

through 15 more
giant disc-like filters

Figure 7. Filter cascade

European Patent Office

**EUROPEAN SEARCH REPORT**

Application Number

EP 98 12 2099

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 599 816 A (SUGITOMO AKITOSHI) 1 June 1994 * column 7, line 45 - column 34, line 45; figures 1,9-11,15,16 * | 1-23 | C02F1/00 |
| X | GB 2 303 316 A (BAKER HUGHES LTD) 19 February 1997 * page 5, line 9 - page 12, line 20; figures 1,2 * | 1-23 | |
| X | US 4 906 358 A (SASAKI TOSHIHIKO ET AL) 6 March 1990 * column 2, line 14 - column 4, line 37; figures 1,2 * | 1-12, 14-23 | |
| X | US 5 256 307 A (BACHHOFER BRUNO ET AL) 26 October 1993 * column 2, line 5 - column 4, line 26; figure 1 * | 1-7,10, 15,17-23 | |
| X | DE 42 04 681 A (BUCHER VOLKER) 13 January 1994 * column 1, line 3 - column 2, line 20; figure 1 * | 1-7, 10-15, 17-23 | TECHNICAL FIELDS SEARCHED (Int.Cl.6) C02F |

The present search report has been drawn up for all claims

| Place of search | Date of completion of the search | Examiner |
|---|---|---|
| MUNICH | 6 May 1999 | Assogna, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**            EP 98 12 2099

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-1999

| Patent document cited in search report | | Publication date | Patent family member(s) | | Publication date |
|---|---|---|---|---|---|
| EP 0599816 | A | 01-06-1994 | JP | 2685657 B | 03-12-1997 |
| | | | JP | 4238970 A | 26-08-1992 |
| | | | DE | 69112197 D | 21-09-1995 |
| | | | DE | 69112197 T | 22-02-1996 |
| | | | EP | 0494334 A | 15-07-1992 |
| | | | EP | 0715874 A | 12-06-1996 |
| | | | EP | 0710498 A | 08-05-1996 |
| | | | US | 5370793 A | 06-12-1994 |
| | | | US | 5584992 A | 17-12-1996 |
| | | | US | 5584990 A | 17-12-1996 |
| | | | US | 5632890 A | 27-05-1997 |
| | | | US | 5244585 A | 14-09-1993 |
| | | | JP | 2554211 B | 13-11-1996 |
| | | | JP | 4323470 A | 12-11-1992 |
| GB 2303316 | A | 19-02-1997 | AU | 6941596 A | 18-02-1997 |
| | | | BR | 9609772 A | 26-01-1999 |
| | | | EP | 0843650 A | 27-05-1998 |
| | | | GB | 2326113 A | 16-12-1998 |
| | | | WO | 9703926 A | 06-02-1997 |
| | | | NO | 980220 A | 16-03-1998 |
| US 4906358 | A | 06-03-1990 | DE | 3737424 A | 07-07-1988 |
| | | | US | 4963269 A | 16-10-1990 |
| US 5256307 | A | 26-10-1993 | DE | 3914024 A | 31-10-1990 |
| | | | AU | 641919 B | 07-10-1993 |
| | | | AU | 5421690 A | 29-11-1990 |
| | | | CA | 2053259 A | 29-10-1990 |
| | | | WO | 9013520 A | 15-11-1990 |
| | | | DE | 59003367 D | 09-12-1993 |
| | | | EP | 0470093 A | 12-02-1992 |
| | | | ES | 2060157 T | 16-11-1994 |
| DE 4204681 | A | 13-01-1994 | NONE | | |

EPO FORM P0459

For more details about this annex : see Official Journal of the European Patent Office, No. 12/82